# EUROPÄISCHE PATENTSCHRIFT

(11) **EP 1 962 236 B1**
(45) Veröffentlichungstag und Bekanntmachung des Hinweises auf die Patenterteilung: **02.12.2009**
(21) Anmeldenummer: 07001672.0
(22) Anmeldetag: 26.01.2007
(51) Int. Cl.: G06Q 10/00

(54) **Verfahren und Anordnung zur Beladung von Transporteinrichtungen mit Behältnissen**
Method and assembly for loading transport units with containers
Procédé et agencement destinés au chargement de dispositifs de transport avec des conteneurs

(43) Veröffentlichungstag der Anmeldung: 27.08.2008
(73) Patentinhaber: Siemens Schweiz AG, 8047 Zürich (CH)
(72) Erfinder: Sprich, Olaf, 8914 Aeugst a.A. (CH); Willeke, Hubertus, 8126 Lufingen (CH)
(74) Vertreter: Kley, Hansjörg

(56) Entgegenhaltungen:
- EP-A- 0 179 308
- EP-A1- 0 156 953
- WO-A-00/76887

## Beschreibung

Die Erfindung bezieht sich auf ein Verfahren und eine Anordnung zur Beladung von Transporteinrichtungen mit Behältnissen nach dem Oberbegriff des Patentanspruchs 1 bzw. dem Patentanspruch 8.

Beim Beladen von grösseren Transportbehältnissen wie Container oder ganze Fahrzeugen mit den zu befördernden Gütern, Paketen und Paletten stellt sich das Problem der richtigen Beladungsreihenfolge. Die Reihenfolge wird typischer Weise durch die Zustellroute bestimmt, unter gleichzeitiger Berücksichtigung einer optimalen Auslastung des möglichen Volumens und Gewichts des Transportbehältnisses. Das heute oft händisch stattfindende Beladen ist insofern schwierig und fehleranfällig, da Lieferungen für einzelne Kunden oder Lieferadressen oft aus mehreren Einheiten (Pakete, Paletten etc.) bestehen. Zusätzlich sollen keine Fehllieferungen stattfinden, d.h. keine Güter auf die falsche Tour verladen werden und auszuliefernde Aufträge vollständig geladen werden.

Für eher kleinere Güter ist im Patent EP 1 651 546 B1 [1] eine Anlage und ein Verfahren zum Kommissionieren von Artikeln in Auftragsbehälter offenbart. Für grössere Güter eignet sich dies nicht. Diese Einschränkung gilt auch für die Anmeldung EP 1 619 104 A2 [2]. Diese Schrift kommt dem vorstehend Problem insoweit näher, als hier die Reihenfolge für die Entnahme der Güter festgelegt ist und damit eine effiziente Entladung sicher gestellt ist.

Aus der Schrift DE 198 54 744 A1 [3] ist ferner bekannt, dass die Güter oder die Verpackungen mit einem Chip versehen werden können, auf dem die Eigenschaft der Güter bzw. Verpackung gespeichert sind und von einem Lesegerät erfasst werden können.

Heute bestehen, insbesondere bei der Güterlogistik, so genannte Kommissionierplätze, auf welchen unmittelbar vor dem zu beladenden Transportbehältnis oder Fahrzeug die auszuliefernden Güter zwischengelagert und zu einer Tour zusammengestellt werden. Mitarbeiter gehen dann entsprechend der geplanten Zustelltour den ganzen Kommissionierplatz ab und suchen sich mühsam die einzelnen Güter in der richtigen Reihenfolge heraus und verladen diese in das Transportbehältnis oder Fahrzeug. In der Regel stehen den Mitarbeitern dabei als Hilfsmittel lediglich eine Ladeliste, von Auge lesbare Etiketten an den Gütern und allenfalls Barcode-Labels auf den Gütern zur Verfügung. Die Barcodes werden mit einem Barcode-Leser gelesen. Die optimale Ladereihenfolge wird heute nicht systemtechnisch unterstützt und basiert ausschliesslich auf der intellektuellen Leistung der Lagerarbeiter und Fahrer. Damit birgt der Beladeprozess ein hohes Fehlerrisiko. Eine eigentliche Führung, welches Gut als erstes, als zweites etc. eingeladen werden soll und ein Verweis auf das auf dem Kommissionierplatz gelagerte Gut gibt es zum heutigen Zeitpunkt nicht. Dementsprechend ist dieser Prozess relativ zeitintensiv, mühselig und fehleranfällig. Fehllieferungen bedeuten für das Transportunternehmen in der Regel hohe Folgekosten, aufwendige Abklärungen und unzufriedene Kunden.

In EP 0 179 308 A2 [5] wird eine Warenkommsionierungsvorrichtung offenbart, bei der die zu entnehmende Ware am entsprechenden Warenfach optisch signalisiert wird, wobei diese Signalisierung von einem Rechner gesteuert wird.

Aus EP 0 156 953 A1 ist bekannt, dass die zu kommissionierenden Waren mit einer maschinell (optisch, elektronisch) lesbaren Codierung versehen werden können.

Ausgehend von diesem Stand der Technik stellt sich das Problem, ein Verfahren und eine Vorrichtung für grosse Güter anzugeben, die das Personal beim Beladen eines Fahrzeuges oder eines Grosscontainers wirksam unterstützt, eine einzuhaltende Ladereihenfolge (engl. Sequencing) sicherzustellen.

Diese Aufgabe wird erfindungsgemäss durch ein Verfahren mit den Merkmalen des Patentanspruchs 1 und eine Anordnung mit den Merkmalen des Patentanspruchs 8 gelöst.

Durch die Signalisierung des nächsten (genau: «nächstfolgenden») zu verladenden Behältnisses ist ein gegenüber Umwelteinflüssen unempfindliches und für das Personal einfaches Verfahren und eine zweckmässige Anordnung geschaffen, das ein effizientes und bezüglich Reihenfolge korrektes Verladen von Behältnissen auf eine Transporteinrichtung ermöglicht. Insbesondere die Ausgestaltungen der Erfindung mit der RFID-Technik und mit einem Laserstrahl sind gegenüber den Umwelteinflüssen robust.

Vorteilhafte Weiterbildungen sind Gegenstand der abhängigen Ansprüche.

Ausführungsbeispiele der Erfindung werden nachfolgend anhand der Zeichnung näher erläutert. Es zeigen:
- Fig. 1: eine Ausführungsform der Erfindung mit einem optischen zeigemittel;
- Fig. 2: eine Ausführungsform der Erfindung mit einem Zeigemittel gebildet aus einem Sender und auf den Behältnissen angeordneten Transpondern.

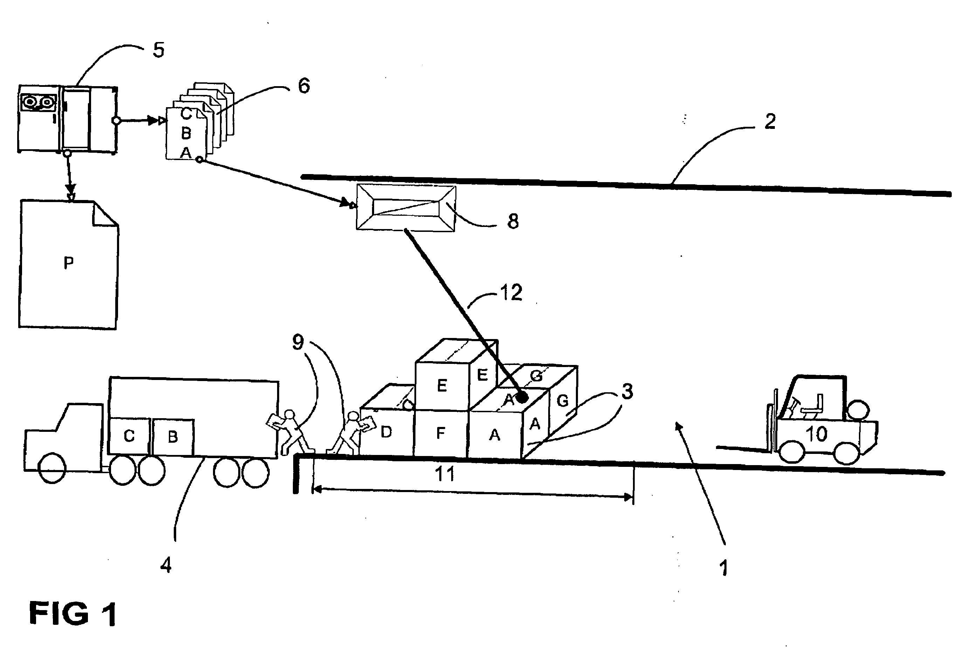

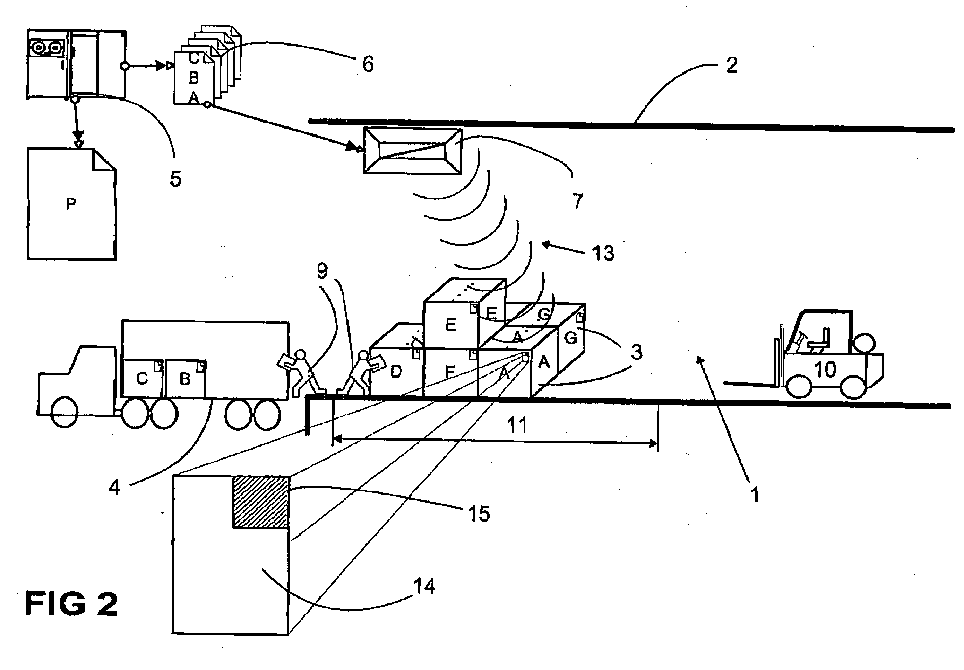

Figur 1 und Figur 2 zeigen einen Kommissionierplatz 11 in einer Lagerhalle 1. Die zu verladenen Behältnisse 3, die auch als Container 3 oder als schwereres Gut 3 ausgebildet sein können, werden von einem Gabelstapler 10 gemäss einer Tourenliste (nicht dargestellt in den Fig. 1 und 2) aus einem Lager in ungeordneter oder eben zufälliger Weise herangeführt und am Kommissionierplatz 11 abgeladen. Dabei ist aus Platzgründen vorzusehen, dass die herangeführten Behältnisse 3 gegebenenfalls teilweise auch gestapelt abgeladen werden müssen.

Die herangeführten Güter sind alle mit einem Identifikationsmittel versehen - in den Figuren nicht dargestellt - mit denen sich deren genaue Position feststellen lässt und deren Position einem Rechner 5 zugeführt wird. Solche Systeme sind bekannt, beispielsweise gemäss WO 2005/033734 A1 [4].

Dem Rechnersystem 5 ist eine Ladeliste 6 zugewiesen. Für eine Tour hat das Rechnersystem Zugriff auf einen Routenplan P.

Nun zur Darstellung gemäss der Figur 1:
Eine über dem Kommissionierplatz 11 installierte optische Zeigeeinrichtung 8 wirft einen Laserstrahl 12 oder Lichtstrahl 12 (Pointer) auf das zu verladende Behältnis 3. Somit kann dem Mitarbeiter 9, Behältnis 3 nach Behältnis 3, entsprechend der einzuhaltenden richtigen Reihenfolge C B D angezeigt werden.

Aus den Figuren 1 und 2 ist unschwer zu erkennen, dass je nach Menge und Höhe der herangeführten Behältnisse 3 ein Lichtstrahl das nächstfolgende zu verladende Behältnis 3 nicht erreicht, weil ein anderes Behältnis den direkten optischen Zugang von der Zeigeeinrichtung 8 her verwehrt. Dieses Problem kann wie folgt gelöst werden. Zusätzlich zur Zeigeeinrichtung 8 sind an der Decke 2 durch das Rechnersystem 5 positionierbare Spiegel angebracht. Das Rechnersystem 5 steuert diese positionierbaren Spiegel so, dass z.B. in einer Sequenz von 1s das nächstfolgende zu verladende Behältnis 3 von der Decke 2 von verschiedenen Seiten her mit einem Licht-/Laserstrahl 12 versehen wird und so den Personen 9 eindeutig und zuverlässig angezeigt werden kann.

Woher weiss das Rechnersystem 5, wo welches Behältnis A B C .. auf dem Kommissionierplatz 11 steht? Hierzu sind verschiedene weitere Ausgestaltungen denkbar:
1. Auf jedem Behältnis 3 wird oben eine optisch, durch eine über dem Kommissionierplatz 11 installierte Kamera, lesbare Information wie z.B. eine Zahl, ein linearer Barcode, ein DataMatrix-Code (=zweidimensionaler Barcode),angebracht. Im einfachsten Fall ist das Medium ein Blatt Papier der Grösse A4 oder grösser, mit beispielsweise einem DataMatrix-Code bedruckt. Die Kamera scannt permanent den Kommissionierplatz 11 ab und ordnet den gelesenen Informationen und damit auch den Behältnissen 3 entsprechende Koordinaten zu. Die Kamera und der Kommissionierplatz 11 sind fix, so dass die Koordinaten problemlos ermittelt werden können. Diese Koordinaten werden dann, beim Abruf der einzuladenden Behältnisse 3, an das den Laserstrahl 12 steuernde Rechnersystem 5 weitergegeben.
2. Die zu verladenden Behältnisse 3 sind mit RFID-Transpondern (eingangs Identifikationsmittel genannt) ausgestattet (in den Figuren nicht dargestellt), welche eine relativ genaue Ortung zulassen. Hierzu gibt es bereits verschiedenen praxiserprobte Lösungen. Die RFID-Installation gibt dann, die für jeden Transponder und somit jedes Behältnis 3 erfasste Koordinaten, bei Bedarf weiter an das den Laserstrahl steuernde Rechnersystem 5.
3. Ebenfalls bereits existierend sind Systeme, bei welchen die Gabelstapler 10, die zum Transport der Behältnisse 3 eingesetzt werden eine genaue Position ermitteln und an das eingangs genannte Rechnersystem 5 weiterleiten. Mit der genauen Position des Gabelstaplers 10 lässt sich auch die genaue Position Ortes ermitteln, an dem ein Behältnis 3 abgeladen wurde.

Gemäss der Ausführungsform in Figur 2 ist jedes Behältnis 3 mit einem aktiven Transponder 14 ausgestattet, welcher neben der eigentlichen RFID-Technik auch noch ein optisches und/oder akustisches Signal wie zum Beispiel ein gut und rundherum sichtbares LED-Licht oder ein Piezo-Element o.ä. beinhaltet. Die aktiven Transponder 14 werden über die RFID-Installation 7 bzw. Sender 7 an der Decke 2 vom Rechnersystem 5 über eine Meldung 13 angesteuert, das nach Berechnung der optimalen Zustellroute auch die Beladereihenfolge C B D der auszuliefernden Behältnisse 3 bestimmt hat. Dementsprechend leuchtet jedes Mal jener Transponder 14, respektive dessen optisches Signal, der auf dem als nächstes zu verladendendes Behältnis 3 angebracht ist. Somit kann dem Mitarbeiter 9, wiederum Behältnis 3 nach Behältnis 3, entsprechend der richtigen Reihenfolge C B D angezeigt werden um in die Transporteinrichtung 4 verladen zu werden. Die RFID-Installation 7 erkennt z.B. über entsprechende Distanzmessungen bzw, dadurch, dass einer Transponder ausserhalb der Reichweite ist, wonach das korrekte Behältnis 3 den Kommissionierplatz 11 verlassen hat bzw. auf eine Transporteinrichtung 4 verladen wurde. Daraufhin ruft das Rechnersystem 5 das nächste Behältnis 3, respektive dessen aktiven Transponder 14 auf und dessen LED-Licht beginnt zu leuchten. Im Falle eines akustischen Signals wäre dieses anstatt oder zusätzlich zum optischen Signal zu hören. Dieses akustische Signal kann von einem Lautsprecher 15 oder von einem Piezo-Piepser 15 abgegeben wrden. Da für diese Behältnisse 3 bezüglich Gewicht und Ausstattung nicht so bedeutende Restriktionen bestehen, ist der Einsatz eines Lautsprechers 15 nicht abwegig.

Die RFID-Installation 8 kann pro Kommissionierplatz 11 oder für eine ganze Lagerhalle 1 mit mehreren Kommissionierplätzen 11 vorgesehen werden.

Das optische und/oder akustische Signal reicht aus, um dem Mitarbeiter 9 den genauen Standplatz des nächsten zu verladenden Behältnisses 3 anzuzeigen.

Durch die vorgenannte zwei Ausführungsformen Laserstrahl/Lichtstrahl oder Transponder wird eine wesentliche Verbesserung beim Beladen eines Transportmittels 4 bezüglich Effizienz, Vollständigkeit und Korrektheit erzielt.

Der vorgenannte Transponder 14 mit dem optischen oder akustischen Anzeigemittel kann separat zum eingangs genannten Identifikationsmittel an einem Behältnis 3 angebracht sein. Ebenso gut kann ein einziger Transponder 14 vorgesehen sein, der die Funktion Identifikationsmittel für die Ortung eines Behältnisses 3 auf dem Kommissionierplatz 11 enthält wie auch die Funktion der optischen oder akustischen Signalisierung.

### Liste der verwendeten Bezugszeichen

- 1: Lagerhalle
- 2: Decke der Lagerhalle
- 3: Güter, Behältnisse, Container
- 4: Transporteinrichtung, Lastwagen, Güterwagen
- 5: Rechnersystem
- 6: Ladeliste
- 7: Sender; RFID-Installation
- 8: Optische Zeigeeinrichtung
- 9: Ladepersonal; Mitarbeiter
- 10: Hubstapler
- 11: Kommissionierplatz, Kommissionierzone
- 12: Lichtstrahl, Laserstrahl
- 13: RF-Feld; Meldung
- 14: Transponder, Tag; RFID-Transponder
- 15: Signalisierungsmittel; LED, Lichtquelle; Lautsprecher, Piezo-Piepser
- A, B, C, ..: Identität der Güter, Behältnisse oder Container; Reihenfolge der Behältnisse
- P: Routenplan

### Liste der zitierten Dokumente

[1] EP 1 651 546 B1
   Anlage und Verfahren zum Kommissionieren von Artikeln in Auftragsbehälter SSI Schäfer Peem GmbH, AT - 8051 Graz
[2] EP 1 619 104 A2
   Verfahren zur Kommissionierung und Verbringung von Waren Siemens Aktiengesellschaft, DE 80333 München, Nestle Deutschland AG, DE - 60523 Frankfurt
[3] DE 198 54 744 A1
   System zur Erfassung von Gütern
   Guth, Gordon, DE 60316 Frankfurt
[4] WO 2005/033734 A1
   Transponderunterstütztes Positioniersystem INDYON GmbH; DE - 80686 München
[5] EP 0 179 308 A2
   Vorrichtung zur Lagerverwaltung und -steuerung und insbesondere Warenkommissionierung PRIVATES INSTITUT FÜR PHYSIKLISCH TECHNISCHE AUFTRAGSFORSCHUNG GMBH; DE-6100 Darmstadt.
[6] EP 0 156 953 A1
   Kommissioniereinrichtung
   Siemens Aktiengesellschaft; DE-8000 München.

### Liste der verwendeten Akronyme

- LED: Light emitting diode
- RF: Radio Frequency
- RFID: Radio Frequency Identification

## Patentansprüche

1. Verfahren zum Kommissionieren von Behältnissen (3) in einer vorbestimmten Reihenfolge (C B D), wobei
- jedes Behältnis (3) mit einem Identifikationsmittel (14) versehen ist, das eine Lagebestimmung des Behältnisses (3) am Kommissionierplatz (11) optisch mit einer über dem Kommissionierplatz (11) installierten Kamera oder elektronisch mit einer RFID-Installation (7) ermöglicht;
- eine Ladeliste (6) vorhanden ist, die die auf ein Transportmittel (4) zu verladenden Behältnisse (3) festlegt;
- ein Routenplan (P) vorhanden ist, der die Reihenfolge der auf das Transportmittel (4) zu verladenden Gruppen von Behältnissen (3) festlegt;
- ein Rechnersystem (5) aus der Lagebestimmung die Lage der Behältnisse (3) erfasst;
- dem Rechnersystem (5) der Routenplan (P) und die Ladeliste (6) zugewiesen wird;
**dadurch gekennzeichnet, dass**
die Behältnisse (3) an einen Kommissionierplatz (11) in zufälliger Anordnung zugeführt werden und das nächstfolgende in der vorbestimmten Reihenfolge (C B D) zu verladende Behältnis (3) durch ein in dem Kommissionierplatz (11) zugeordnetes, durch das Rechnersystem (5) gesteuertes Zeigemittel (7, 8, 14, 15) signalisiert wird.

2. Verfahren nach Anspruch 1,
**dadurch gekennzeichnet, dass**
das Zeigemittel (7, 8, 14, 15) eine optische Zeigeeinrichtung (8) ist und dass die Signalisierung mit einem Licht- oder Laserstrahl (12) erfolgt, der auf das nächstfolgende zu verladende Behältnis (3) zeigt.

3. Verfahren nach Anspruch 2,
**dadurch gekennzeichnet, dass**
das Zeigemittel (7, 8, 14, 15) zusätzlich vom Rechnersystem (5) gesteuerte Spiegel umfasst, so dass der Licht- oder Laserstrahl (12) das nächstfolgende zu verladende Behältnis (3) von verschieden Seiten erreicht.

4. Verfahren nach Anspruch 1,
**dadurch gekennzeichnet, dass**
das Zeigemittel gebildet wird durch einen dem Kommissionierplatz (11) zugeordneten Sender (7) und durch einen auf jedem Behältnis (3) angebrachten Transponder (14), wobei durch eine vom Sender (7) ausgesandte Meldung (13) ein auf dem Transponder (14) vorhandenes Signalisierungsmittel (15) aktiviert wird und so das nächstfolgende zu verladende Behältnis (3) signalisiert wird.

5. Verfahren nach Anspruch 4,
**dadurch gekennzeichnet, dass**
das Signalisierungsmittel als eine LED (15) ausgebildet ist.

6. Verfahren nach Anspruch 4 oder 5,
**dadurch gekennzeichnet, dass**
das Signalisierungsmittel (15) von einem Lautsprecher oder einem Piezo-Piepser gebildet wird, von denen ein akustisches Signal abgeben wird.

7. Verfahren nach einem der Ansprüche 4 bis 6,
**dadurch gekennzeichnet, dass**
für eine Mehrzahl von Kommissionierplätzen (11) ein Sender (7) zugeordnet ist.

8. Anordnung zum Kommissionieren von Behältnissen (3) in einer vorbestimmten Reihenfolge (C B D) an einem Kommissionierplatz (11), welche Anordnung enthält:
- ein Rechnersystem (5),
- Mittel zur Lagebestimmung der Behältnisse (3) am Kommissionierplatz (11) mittels an den Behältnissen (3) angebrachten Identifikationsmitteln; wobei die Mittel entweder eine über dem Kommissionierplatz (11) installierten Kamera oder eine RFID-Installation (7) umfassen und mit dem Rechnersystem (5) verbunden sind;
- dem Rechnersystem (5) zugewiesener Routenplan (P) und zugewiesene Ladeliste (6); wobei die Ladeliste (6) die auf ein Transportmittels (4) zu verladenden Behältnisse (3) festlegt und der Routenplan (P) die Reihenfolge der auf das Transport-mittel (4) zu verladenden Gruppen von Behältnissen (3) festlegt;
**dadurch gekennzeichnet, dass**
die Lagebestimmung der Behältnisse (3) aufgrund einer zufälligen Zuführung an den Kommissionierplatz (11) erfolgt und ein durch das Rechnersystem (5) gesteuertes Zeigemittel (7, 8, 14, 15) vorgesehen ist, das das nächstfolgende in der vorbestimmten Reihenfolge (C B D) zu verladende Behältnis (3) signalisiert.

9. Anordnung nach Anspruch 8,
**dadurch gekennzeichnet, dass**
das Zeigemittel eine optische Zeigeeinrichtung (8) ist und dass die Signalisierung mit einem Licht- oder Laserstrahl (12) erfolgt, der auf das nächstfolgende zu verladende Behältnis (3) zeigt.

10. Anordnung nach Anspruch 9,
**dadurch gekennzeichnet, dass**
die optische Zeigeeinrichtung (8) zusätzlich vom Rechnersystem (5) gesteuerte Spiegel umfasst, so dass der Licht- oder Laserstrahl (12) das nächstfolgende zu verladende Behältnis (3) von verschieden Seiten erreicht.

11. Anordnung nach Anspruch 8,
**dadurch gekennzeichnet, dass**
das Zeigemittel gebildet wird durch einen dem Kommissionierplatz (11) zugeordneten Sender (7) und durch einen auf jedem Behältnis (3) angebrachten Transponder (14), wobei durch eine vom Sender (7) ausgesandte Meldung (13) ein auf dem Transponder (14) vorhandenes Signalisierungsmittel (15) aktiviert wird und so das nächstfolgende zu verladende Behältnis (3) signalisiert wird.

12. Anordnung nach Anspruch 11,
**dadurch gekennzeichnet, dass**
das Signalisierungsmittel als eine LED (15) ausgebildet ist.

13. Anordnung nach Anspruch 11 oder 12,
**dadurch gekennzeichnet, dass**
das Signalisierungsmittel (15) durch einen Lautsprecher oder einen Fiezo-Piepser gebildet wird.

## Claims

1. Method for loading containers (3) in a predefined sequence (C B D), with
- each container (3) being provided with a means of identification (14) which makes it possible to determine the location of the container (3) at the loading site (11) optically with a camera installed above the loading site (11) or electronically with an RFID installation (7);
- a loading list (6) being available, which determines containers (3) to be loaded onto a means of transport (4);
- a route plan (P) is available, which defines the sequence of the groups of containers (3) to be loaded onto the means of transport (4);
- a computer system (5) detects the location of the containers (3) from the location determination;
- the computer system (5) is allocated the route plan (P) and the loading list (6);
**characterised in that**
the containers (3) are supplied to a loading site (11) in a random arrangement and the next container (3) in the predefined sequence (C B D) to be loaded is signalled by a pointer means (7, 8, 14, 15) assigned in the loading site (11), controlled by the computer system (5).

2. Method according to claim 1,
**characterised in that**
the pointer means (7, 8, 14, 15) is an optical pointer device (8) and that signalling is undertaken with a light beam or a laser beam (12) which points to the next container (3) to be loaded.

3. Method according to claim 2,
**characterised in that**
the pointer means (7, 8, 14, 15) additionally comprises a mirror controlled by the computer system (5), so that the light or laser beam (12) reaches the next container (3) to be loaded from different sides.

4. Method according to claim 1,
**characterised in that**
the pointer means is formed by a transmitter (7) assigned to the loading site (11) and by a transponder (14) attached to each container (3), with a signalling means (15) present on the transponder (14) being activated in each case by a message (13) transmitted by the transmitter and thus the next container (3) to be loaded being signalled.

5. Method according to claim 4,
**characterised in that**
the signalling means is embodied as an LED (15).

6. Method according to claim 4 or 5,
**characterised in that**
the signalling means (15) is formed be a loudspeaker and a piezo buzzer, from which an acoustic signal is emitted.

7. Method according to one of claims 4 to 6,
**characterised in that**
one transmitter (7) is assigned for a plurality of loading sites (11).

8. Arrangement for loading containers (3) in a predefined sequence (C B D) at a loading site (11), which arrangement contains:
a computer system (5),
means for determining the location of containers (3) at the loading site (11) by way of means of identification attached to the containers (3); with the means comprising either a camera installed above the loading site (11) or an RFID installation (7) and being connected to the computer system (5) ;
the route plan (P) and loading list (6) allocated to the computer system (5); with the loading list (6) defining the containers (3) to be loaded onto a means of transport and the route plan (P) defining the sequence of the groups of containers (3) to be loaded onto the transport means (4);
**characterised in that**
the determination of the location of the containers (3) is undertaken based on a random supply to the loading site (11) and a pointer means (7, 8, 14, 15) controlled by the computer system (5) is provided, which signals the next container (3) to be loaded in the predefined sequence (C B D).

9. Arrangement according to claim 8,
**characterised in that**
the pointer means is an optical pointer device (8) and that signalling is undertaken with a light beam or laser beam (12) which points to the next container (3) to be loaded.

10. Arrangement according to claim 9,
**characterised in that**
the optical pointer device (8) additionally comprises a mirror controlled by the computer system (5), so that the light or laser beam (12) reaches the next container (3) to be loaded from different sides.

11. Arrangement according to claim 8,
**characterised in that**
the pointer means is formed by a transmitter (7) assigned to the loading site (11) and by a transponder (14) attached to each container (3), with a signalling means (15) present on the transponder (14) being activated in each case by a message (13) transmitted by the transmitter and thus the next container (3) to be loaded being signalled.

12. Arrangement according to claim 11,
**characterised in that**
the signalling means is embodied as an LED (15).

13. Arrangement according to claim 11 or 12,
**characterised in that**
the signalling means (15) is formed be a loudspeaker and a piezo buzzer.

## Revendications

1. Procédé de rassemblement de conteneurs ( 3 ) dans un ordre ( C B D ) déterminé à l'avance, dans lequel
- on munit chaque conteneur ( 3 ) d'un moyen ( 14 ) d'identification qui rend possible une détermination de la position du conteneur ( 3 ) à l'emplacement ( 11 ) du rassemblement optiquement par une caméra installée au-dessus de l'emplacement ( 11 ) de rassemblement ou électroniquement par une installation ( 7 ) RFID ;
- il y a une liste ( 6 ) de chargement qui fixe les conteneurs ( 3 ) à charger sur un moyen ( 4 ) de transport ;
- il y a un plan ( P ) d'acheminement qui fixe l'ordre des groupes de conteneurs à charger sur le moyen ( 4 ) de transport ;
- un système ( 5 ) informatique détermine, à partir de la détermination de position, la position des conteneurs ( 3 ) ;
- le plan ( P ) d'acheminement et la liste ( 6 ) de chargement sont affectés au système ( 5 ) informatique ;
**caractérisé en ce que**
on envoie les conteneurs ( 3 ) à un emplacement ( 11 ) de regroupement suivant un agencement aléatoire et on signale le conteneur ( 3 ) à charger venant immédiatement ensuite dans l'ordre ( C B D ) déterminé à l'avance par un moyen ( 7, 8, 14, 15 ) indicateur associé à l'emplacement ( 11 ) de regroupement et commandé par le système ( 5 ) informatique.

2. Procédé suivant la revendication 1, **caractérisé en ce que**
le moyen ( 7, 8, 14, 15 ) informatique est un dispositif ( 8 ) indicateur optique et **en ce que** la signalisation s'effectue par un faisceau ( 12 ) lumineux ou laser pointé sur le conteneur ( 3 ) à charger venant immédiatement ensuite.

3. Procédé suivant la revendication 2, **caractérisé en ce que**
le moyen ( 7, 8, 14, 15 ) indicateur comporte, en plus du système ( 5 ) informatique, un miroir commandé de sorte que le faisceau ( 12 ) lumineux ou laser atteigne le conteneur ( 3 ) à charger venant immédiatement ensuite par des côtés différents.

4. Procédé suivant la revendication 1, **caractérisé en ce que**
le moyen indicateur est formé par un émetteur ( 7 ) affecté à l'emplacement ( 11 ) de regroupement et par un transpondeur ( 14 ) mis sur chaque conteneur ( 3 ), un moyen ( 15 ) de signalisation présent sur le transpondeur ( 14 ) étant activé par un message ( 13 ) émis par l'émetteur ( 7 ) et ainsi le conteneur ( 3 ) à charger venant immédiatement ensuite est signalé.

5. Procédé suivant la revendication 4, **caractérisé en ce que**
le moyen de signalisation est constitué sous la forme d'une DEL ( 15 ).

6. Procédé suivant la revendication 4 ou 5, **caractérisé en ce que** le moyen ( 15 ) de signalisation est formé par un haut-parleur ou par un sifflet piézo-électrique, desquels est émis un signal acoustique.

7. Procédé suivant l'une des revendications 4 à 6, **caractérisé en ce qu'**un émetteur ( 7 ) est affecté à une multiplicité d'emplacements ( 11 ) de regroupement.

8. Agencement de rassemblement de conteneurs (3) dans un ordre ( C B D) déterminé à l'avance à un emplacement (11) de rassemblement, l'agencement comportait
- un système (5) informatique,
- des moyens de détermination de la position des conteneurs (3) à l'emplacement (11) de rassemblement à l'aide de moyens d'identification apposés sur les conteneurs (3) ; les moyens comprenant soit une caméra montée au-dessus de l'emplacement (11) de rassemblement, soit une installation (7) RFID et étant reliés au système (5) informatique,
- un plan (P) d'acheminement et une liste (6) de chargement affectés au système (5) informatique ; la ligne (6) de chargement fixant les conteneurs (3) à charger sur un moyen (4) de transport et le plan (P) d'acheminement fixant l'ordre des groupes de conteneurs (3) à charger sur le moyen (4) de transport ;
**caractérisé en ce que**
la détermination en position des conteneurs (3) s'effectue sur la base d'un envoi au hasard à l'emplacement (11) de rassemblement et il est prévu un moyen (7, 8, 14, 15) indicateur qui est commandé par le système (5) informatique et qui signale le conteneur (3) à charger venant immédiatement ensuite dans l'ordre ( C B D) déterminé à l'avance.

9. Agencement suivant la revendication 8,
**caractérisé en ce que**
le moyen indicateur est un dispositif (8) indicateur optique et **en ce que** la signalisation s'effectue par un faisceau (12) lumineux ou laser qui pointe sur le conteneur (3) à charger venant immédiatement ensuite.

10. Agencement suivant la revendication 9,
**caractérisé en ce que**
le dispositif (8) indicateur optique comprend en plus des miroirs commandés par le système (5) informatique de sorte que le faisceau (12) lumineux ou laser atteigne, par des côtés différents, le conteneur (3) à charger venant immédiatement ensuite.

11. Agencement suivant la revendication 8,
**caractérisé en ce que**
le moyen indicateur est formé par un émetteur (7) affecté à l'emplacement (11) de rassemblement et par un transpondeur (14) apposé sur chaque conteneur (3), un moyen (15) de signalisation présent sur le transpondeur (14) étant activé par un message (13) émis par l'émetteur (7) et le conteneur (3) à charger venant immédiatement ensuite étant ainsi signalé.

12. Agencement suivant la revendication 11,
**caractérisé en ce que**
le moyen de signalisation est constitué sous la forme d'une DEL (15).

13. Agencement suivant la revendication 11 ou 12,
**caractérisé en ce que**
le moyen (15) de signalisation est formé par un haut-parleur ou par un sifflet piézo-électrique.
